# EUROPEAN PATENT SPECIFICATION

(11) **EP 3 155 521 B1**
(45) Date of publication and mention of the grant of the patent: **27.02.2019**
(21) Application number: 15731165.5
(22) Date of filing: 04.06.2015
(51) Int. Cl.: G06F 9/48, G06F 9/50, G06F 1/32

(54) **SYSTEMS AND METHODS OF MANAGING PROCESSOR DEVICE POWER CONSUMPTION**
SYSTEME UND VERFAHREN ZUR VERWALTUNG DES STROMVERBRAUCHS EINER PROZESSORVORRICHTUNG
SYSTÈMES ET PROCÉDÉS PERMETTANT DE GÉRER LA CONSOMMATION D'ÉNERGIE D'UN DISPOSITIF PROCESSEUR

(30) Priority: 10.06.2014 US 201414300457
(43) Date of publication of application: 19.04.2017
(73) Proprietor: Qualcomm Incorporated, San Diego, CA 92121-1714 (US)
(72) Inventor: PUSUKURI, Kishore Kumar, San Diego, California 92121-1714 (US); CASCAVAL, Gheorghe Calin, San Diego, California 92121-1714 (US); WEBER, Michael, Campbell, California 95008 (US)
(74) Representative: Wegner, Hans
(86) International application number: PCT/US2015/034169
(87) International publication number: WO 2015/191358

(56) References cited:
- US-A1- 2009 150 893
- US-A1- 2009 172 424
- US-A1- 2012 144 218
- US-A1- 2013 024 871
- US-A1- 2014 143 570

## Description

### BACKGROUND

Wireless communication technologies and mobile electronic devices (e.g., cellular phones, tablets, laptops, etc.) have grown in popularity and use. To keep pace with increased consumer demands, mobile devices have become more feature-rich, and now commonly include multiple processing devices, system-on-chips (SOCs), and other resources that allow mobile device users to execute complex and power intensive software applications (e.g., video and audio streaming and/or processing applications, network gaming applications, etc.) on mobile devices. Due to these and other improvements, smartphones and tablet computers have grown in popularity, and are replacing laptops and desktop machines as the platform of choice for many users. However, mobile devices often include a relatively limited power supply. The provision of multiple processing devices in a mobile device serves to exacerbate the power storage limitations of mobile devices.

### SUMMARY

Embodiments of the invention are defined by the subject-matter of the claims.

The various aspects include methods of managing processor device power consumption, which may include determining a thread execution metric for each of a plurality of threads scheduled for execution in a processor including a plurality of processing cores; allocating, to a first processing core of the plurality of processing cores, those threads of the plurality of threads whose thread execution metric satisfies a first threshold; and reducing a frequency of the first processing core to reduce the selected processing core's power consumption. In an aspect, allocating to a first processing core those threads whose thread execution metric satisfies a first threshold may include associating into a first group those threads whose thread execution metric satisfies the first threshold, and allocating the first group of threads to the first processing core.

US 2009/0150893 A1 relates to managing threads in a computer system with one or more processing units, each processing unit having a corresponding hardware resource. Threads are characterized based on their use or requirements for access to the hardware resource. The threads are distributed among the processing units in a configuration that leaves at least one processing unit with threads that have an aggregate zero or low usage of the hardware resource. Power may be reduced or turned off to the instances of the hardware resource that have zero or low usage. Distribution may be based on one or more of a number of specifications or factors, such as user power management specifications, power usage, performance, and other factors.

US 2013/0024871 A1 relates to thread management in parallel processes in a multi-core or multi-node system.

US 2012/0144218 A1 relates to transferring power and speed from a lock requester to a lock holder on a system with multiple processors.

In an aspect, the method may include allocating, to a second processing core of the plurality of processing cores, those threads of the plurality of threads whose thread execution metric does not satisfy the first threshold. In a further aspect, the method may include increasing a frequency of the second processing core to increase a rate of processing those threads of the plurality of threads whose thread execution metric does not satisfy the first threshold. In a further aspect, allocating to a second processing core of the plurality of processing cores those threads whose thread execution metric does not satisfy the first threshold may include associating into a second group those threads of the plurality of threads whose thread execution metric does not satisfy the first threshold, and allocating the second group to the second processing core.

In a further aspect, the method may include allocating to a third processing core of the plurality of processing cores those threads whose thread execution metric satisfies a second threshold but does not satisfy the first threshold, and adjusting a frequency of the third processing core to a frequency between the frequency of the first processing core and the frequency of the second processing core.

In a further aspect, the thread execution metric may include a cache miss rate, and the first threshold may include a cache miss rate threshold value. In some aspects, the cache miss rate may include at least one of a number of failed attempts to read or write data in a cache, a number of accesses of a main memory based on failed attempts to read or write data in the cache, and a number of wait states of a processor based on failed attempts to read or write data in the cache.

In a further aspect, reducing a frequency of the first processing core further may include determining a characteristic cache miss rate for the first processing core based on the cache miss rate of the threads allocated to the first processing core, and reducing the frequency of the selected processing core based on the determined characteristic cache miss. In a further aspect, the characteristic cache miss rate may include one of an average cache miss rate of the threads allocated to the selected processing core, a mean cache miss rate of the threads allocated to the selected processing core, a standard deviation from the mean cache miss rate of the threads allocated to the selected processing core, and an aggregate cache miss rate of the threads allocated to the selected processing core.

In a further aspect, the thread execution metric may include a synchronization operation rate, and the first threshold may include a synchronization operation rate threshold value. In some aspects, the synchronization operation may include at least one of a number of spinlocks, a time period of waiting for a requested shared resource, a number of lock instructions, and a rate of synchronization instruction execution.

In an aspect, reducing a frequency of the first processing core may further include determining a characteristic synchronization operation rate for the first processing core based on the synchronization operation rate of the threads allocated to the first processing core, and reducing the frequency of the first processing core based on the determined characteristic synchronization operation rate.

In a further aspect, the thread execution metric may include a rate of instruction type, and the first threshold may include a rate of instruction type threshold value. In a further aspect, the rate of instruction type may include at least one of a rate of floating point instructions, a rate of vector instructions, and a rate of memory instructions. In a further aspect, reducing a frequency of the first processing core may include determining a characteristic rate of instruction type for the first processing core based on the rate of instruction type of the threads allocated to the first processing core, and reducing the frequency of the first processing core based on the determined characteristic rate of instruction type.

Further aspects include a computing device including a processor configured with processor-executable instructions to perform operations of the aspect methods described above. Further aspects include a non-transitory processor-readable storage medium having stored thereon processor-executable software instructions configured to cause a processor to perform operations of the aspect methods described above. Further aspects include a computing device that includes means for performing functions of the operations of the aspect methods described above.

### BRIEF DESCRIPTION OF THE DRAWINGS

The accompanying drawings, which are incorporated herein and constitute part of this specification, illustrate exemplary aspects of the invention. Together with the general description given above and the detailed description given below, the drawings serve to explain features of the invention, and not to limit the disclosed aspects.
FIG. 1 is a component block diagram illustrating an example system-on-chip (SOC) architecture that may be used in computing devices implementing the various aspects.
FIG. 2 is a function block diagram illustrating an example multicore processor architecture that may be used to implement the various aspects.
FIG. 3 is a process flow diagram illustrating an aspect method of managing processor device power consumption.
FIG. 4 is a process flow diagram illustrating another aspect method of managing processor device power consumption.
FIG. 5 is a process flow diagram illustrating another aspect method of managing processor device power consumption.
FIG. 6 is a process flow diagram illustrating another aspect method of managing processor device power consumption.
FIG. 7 is a component block diagram of an example mobile device suitable for use with the various aspects.
FIG. 8 is a component block diagram of an example server suitable for use with various aspects.
FIG. 9 is a component block diagram of a laptop computer suitable for implementing the various aspects.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes and are not intended to limit the scope of the claims.

The word "exemplary" is used herein to mean "serving as an example, instance, or illustration." Any implementation described herein as "exemplary" is not necessarily to be construed as preferred or advantageous over other implementations.

The terms "mobile device," and "computing device" are used interchangeably herein to refer to any one or all of cellular telephones, smartphones, personal or mobile multi-media players, personal data assistants (PDAs), laptop computers, tablet computers, smartbooks, palmtop computers, wireless electronic mail receivers, multimedia Internet enabled cellular telephones, wireless gaming controllers, and similar electronic devices that include a programmable processor and a memory. While the various aspects are particularly useful in mobile devices, such as cellular telephones and other portable computing platforms, which may have relatively limited processing power and/or power storage capacity, the aspects are generally useful in any computing device that allocates threads, processes, or other sequences of instructions to a processing device or processing core.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "multicore processor" is used herein to refer to a single integrated circuit (IC) chip or chip package that contains two or more independent processing devices or processing cores (e.g., CPU cores) configured to read and execute program instructions. A SOC may include multiple multicore processors, and each processor in an SOC may be referred to as a core or a processing core. The term "multiprocessor" is used herein to refer to a system or device that includes two or more processing units configured to read and execute program instructions. The term "thread" or "process" is used herein to refer to a sequence of instructions, which may be allocated to a processing core.

As used in this application, the terms "component," "module," "system," and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a computing device and the computing device may be referred to as a component. One or more components may reside within a process and/or thread of execution and a component may be localized on one processor or core and/or distributed between two or more processors or cores. In addition, these components may execute from various non-transitory processor-readable media having various instructions and/or data structures stored thereon. Components may communicate by way of local and/or remote processes, function or procedure calls, electronic signals, data packets, memory read/writes, and other known computer, processor, and/or process related communication methodologies.

To keep pace with increased consumer demands, mobile devices have become more feature-rich, and now commonly include multiple processing devices, multi-core processors, system-on-chips (SOCs), and other resources that allow mobile device users to execute complex and power intensive software applications (e.g., video and audio streaming and/or processing applications, network gaming applications, etc.) on mobile devices. Mobile devices often include a relatively limited power supply. The provision of multiple processing devices in a mobile device serves to exacerbate the power storage limitations of mobile devices.

The various aspects provide methods, systems and devices for improving the performance and power consumption characteristics of a mobile device by scheduling sequences of instructions (such as processes, threads, etc.) across multiple cores in a multicore system based on determine thread execution metrics, and determining an appropriate frequency of one or more processing cores based on the sequences of instructions assigned to each processing core. The various aspects may be implemented as a user space daemon process, a kernel module (e.g., of an operating system of a mobile device), or an operating system scheduler. In various aspects, one or more threads having a thread execution metric that satisfies a threshold thread execution metric may be allocated to one processing core, and an operating frequency of the processing core may be reduced to improve power consumption and processing efficiency of the processing core, while providing a threshold level of performance of the mobile device.

The various aspects may have particular application in a multicore system in which two or more applications are executed contemporaneously. As the number of contemporaneously executed applications increases, a number of sequences of instructions for execution by the processing cores may increase dramatically, potentially overloading the processing cores with a greater number of threads than available processing cores. When sequences of instructions introduce inefficiencies to the processor, such as by requiring calls to non-cache memory, or by including more requiring scare processor resources or resources that are currently in use by another process or processor, the accompanying delays (e.g., wait times) of the processing cores may have a pronounced impact on application performance.

Using a thread execution metric as a basis for allocating sequences of instructions to particular cores provides a low-overhead method for allocating to one or a few cores processes that involve greater inefficiency, such as more wait times while data is obtained from non-cache memory, delay caused by a synchronization operation, and/or rate at which one or more types of instructions are executed. Because the processing time of sequences of instructions may be dominated by processing inefficiencies introduced by certain sequences of instructions , the processor core or cores executing relatively processor resource-consuming sequences of instructions can operate at a lower frequency, and thus at lower power, without significantly impacting the processing performance. Thus, the various aspects provide a low-overhead method for allocating processing-intensive sequences of instructions to selected processing cores that can operate at higher frequency/higher power to improve processing performance, and allocating more resource and/or time-consuming instruction sequences to one or a few cores that can operate at lower frequency/lower power to conserve battery power without impacting processing performance.

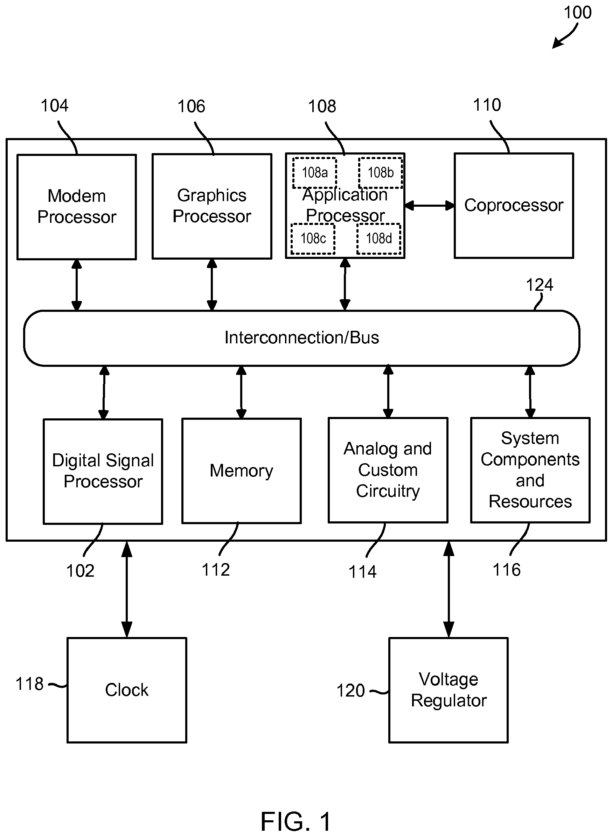

The various aspects may be implemented on a number of single processor and multiprocessor computer systems, including a system-on-chip (SOC). FIG. 1 illustrates an example system-on-chip (SOC) 100 architecture that may be used in computing devices implementing the various aspects. The SOC 100 may include a number of heterogeneous processors, such as a digital signal processor (DSP) 102, a modem processor 104, a graphics processor 106, and an application processor 108. The SOC 100 may also include one or more coprocessors 110 (e.g., vector coprocessor) connected to one or more of the heterogeneous processors 102, 104, 106, 108. Each processor 102, 104, 106, 108, 110 may include one or more cores (e.g., processing cores 108a, 108b, 108c, and 108d illustrated in the application processor 108), and each processor/core may perform operations independent of the other processors/cores. SOC 100 may include a processor that executes an operating system (e.g., FreeBSD, LINUX, OS X, Microsoft Windows 8, etc.) which may include a scheduler configured to schedule sequences of instructions, such as threads, processes, or data flows, to one or more processing cores for execution.

The SOC 100 may also include analog circuitry and custom circuitry 114 for managing sensor data, analog-to-digital conversions, wireless data transmissions, and for performing other specialized operations, such as processing encoded audio and video signals for rendering in a web browser. The SOC 100 may further include system components and resources 116, such as voltage regulators, oscillators, phase-locked loops, peripheral bridges, data controllers, memory controllers, system controllers, access ports, timers, and other similar components used to support the processors and software programs running on a computing device.

The system components and resources 116 and/or custom circuitry 114 may include circuitry to interface with peripheral devices, such as cameras, electronic displays, wireless communication devices, external memory chips, etc. The processors 102, 104, 106, 108 may communicate with each other, as well as with one or more memory elements 112, system components and resources 116, and custom circuitry 114, via an interconnection/bus module 124, which may include an array of reconfigurable logic gates and/or implement a bus architecture (e.g., CoreConnect, AMBA, etc.). Communications may be provided by advanced interconnects, such as high performance networks-on chip (NoCs).

The SOC 100 may further include an input/output module (not illustrated) for communicating with resources external to the SOC, such as a clock 118 and a voltage regulator 120. Resources external to the SOC (e.g., clock 118, voltage regulator 120) may be shared by two or more of the internal SOC processors/cores (e.g., a DSP 102, a modem processor 104, a graphics processor 106, an application processor 108, etc.).

In addition to the SOC 100 discussed above, the various aspects may be implemented in a wide variety of computing systems, which may include multiple processors, multicore processors, or any combination thereof.

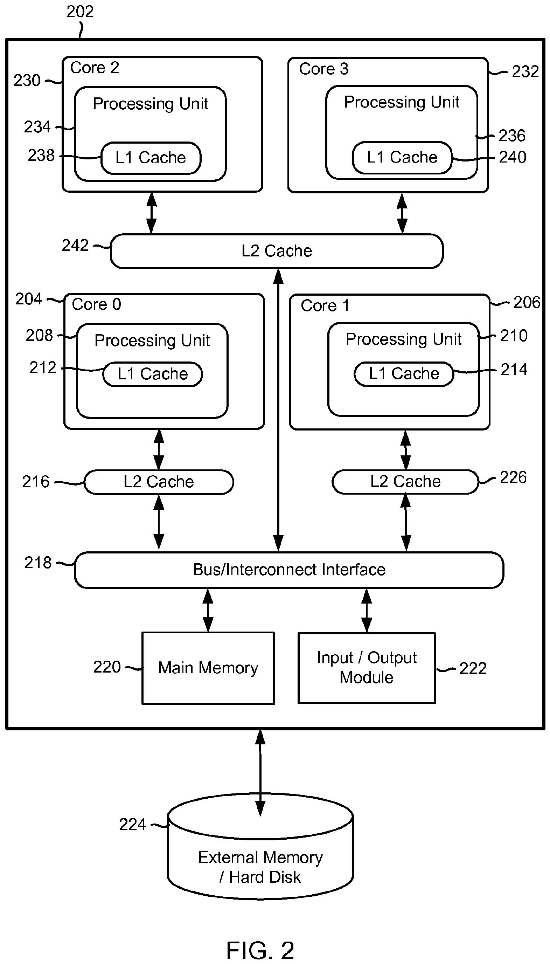

FIG. 2 illustrates an example multicore processor architecture that may be used to implement the various aspects. The multicore processor 202 may include two or more independent processing cores 204, 206, 230, 232 in close proximity (e.g., on a single substrate, die, integrated chip, etc.). The proximity of the processing cores 204, 206, 230, 232 allows memory to operate at a much higher frequency/clock-rate than is possible if the signals have to travel off-chip. The proximity of the processing cores 204, 206, 230, 232 allows for the sharing of on-chip memory and resources (e.g., voltage rail), as well as for more coordinated cooperation between cores. While four processing cores are illustrated in FIG. 2, it will be appreciated that this is not a limitation, and a multicore processor may include more or fewer processing cores.

The multicore processor 202 may include a multi-level cache that includes Level 1 (LI) caches 212, 214, 238, and 240 and Level 2 (L2) caches 216, 226, and 242. The multicore processor 202 may also include a bus/interconnect interface 218, a main memory 220, and an input/output module 222. The L2 caches 216, 226, 242 may be larger (and slower) than the L1 caches 212, 214, 238, 240, but smaller (and substantially faster) than a main memory unit 220. Each processing core 204, 206, 230, 232 may include a processing unit 208, 210, 234, 236 that has private access to an L1 cache 212, 214, 238, 240. The processing cores 204, 206, 230, 232 may share access to an L2 cache (e.g., L2 cache 242) or may have access to an independent L2 cache (e.g., L2 cache 216, 226).

The L1 and L2 caches may be used to store data frequently accessed by the processing units, whereas the main memory 220 may be used to store larger files and data units being accessed by the processing cores 204, 206, 230, 232. The multicore processor 202 may be configured so that the processing cores 204, 206, 230, 232 seek data from memory in order, first querying the L1 cache, then L2 cache, and then the main memory if the information is not stored in the caches. If the information is not stored in the caches or the main memory 220, multicore processor 202 may seek information from an external memory and/or a hard disk memory 224.

The processing cores 204, 206, 230, 232 may communicate with each other via the bus/interconnect interface 218. Each processing core 204, 206, 230, 232 may have exclusive control over some resources and share other resources with the other cores.

The processing cores 204, 206, 230, 232 may be identical to one another, be heterogeneous, and/or implement different specialized functions. Thus, processing cores 204, 206, 230, 232 need not be symmetric, either from the operating system perspective (e.g., may execute different operating systems) or from the hardware perspective (e.g., may implement different instruction sets/architectures).

Multiprocessor hardware designs, such as those discussed above with reference to FIGs. 1 and 2, may include multiple processing cores of different capabilities inside the same package, often on the same piece of silicon. Symmetric multiprocessing hardware includes two or more identical processors connected to a single shared main memory that are controlled by a single operating system. Asymmetric or "loosely-coupled" multiprocessing hardware may include two or more heterogeneous processors/cores that may each be controlled by an independent operating system and connected to one or more shared memories/resources.

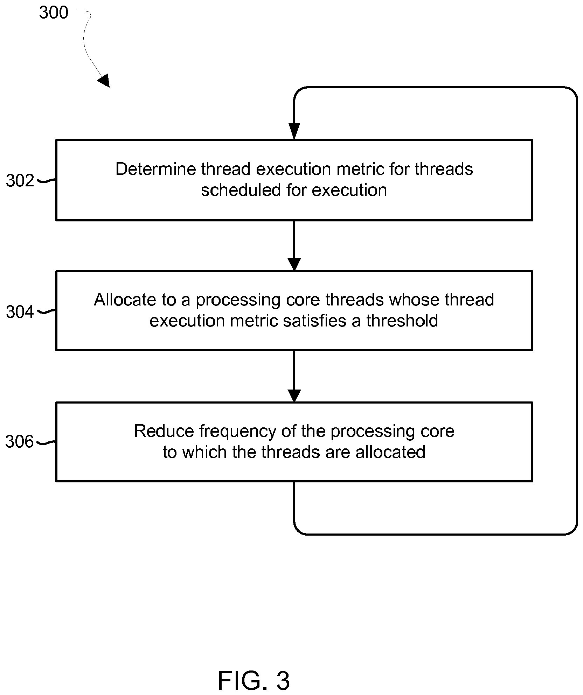

FIG. 3 is a process flow diagram illustrating an aspect method 300 of managing processor device power consumption. In block 302, a processor may determine a thread execution metric for each of a plurality of threads scheduled for execution in the various processing cores (e.g., processing cores 204, 206, 230, 232 illustrated in FIG. 2) of a multi-core processor. The thread execution metric may include, for example, a cache miss rate, a synchronization operation rate, a rate of execution of one or more types of instructions, or other thread execution metrics.

The term "cache miss" refers to a failed attempt to read or write a unit of data from a cache memory, requiring the data to be accessed from the system memory (e.g., main memory 220), which requires more time to complete than when the data is in the cache. For example, a thread processed by the processing unit 208 of the processing core 204 may attempt to retrieve data or instructions from the L1 cache 212. When the data or instructions are not available from the L1 cache 212, the data or instructions may be retrieved from another cache, such as the L2 cache 216, or from the main memory 220. Main memory access in particular is substantially slower than cache access, thus retrieving data or instructions from the main memory 220 introduces latency into the processing of the thread. Due to the delay in retrieving data or instructions from the main memory 220, the processing core may enter a wait state while the main memory access proceeds, during which time no additional processing may be performed. If a thread includes many non-cache read or write operations, the processing core may enter a wait state frequently, thus slowing the overall processing performance of the core.

In various aspects, the cache miss rate calculated by the processor in block 302 for each thread may be a number of failed attempts to read or write data in the cache that will occur when the thread is executed. A cache miss rate that may be calculated in block 302 may also be a number of main memory accesses that will occur during execution of the thread based on failed attempts to read or write data in the cache. The cache miss rate calculated in block 302 may further be a number of wait states that a processor core will enter as a result of performing data or instruction read and write operations to non-cache memory execution of the thread. The cache miss rate for a thread may be calculated in block 302 as an average number of cache misses per unit time and/or an aggregate number per unit time. The cache miss rate may further be calculated in block 302 as a mean number per unit time and/or a standard deviation of a mean number per unit time. Other cache miss calculations are also possible, including combinations of the foregoing.

The term "synchronization operation" refers to an operation that may be performed to enable two or more processors, for example, to execute instructions on a common set of data structures or using a shared piece of application code without interfering in the processing operations of the other processor, or a delay in the execution of a set of instructions caused by the temporary unavailability of processing or other resources to execute the set of instructions. Synchronization operations may be contention-based, such that an increase in the rate of performing synchronization operations may introduce latency into the performance of a processor. A synchronization operation rate calculated by a processor in block 302 may include at least one of a number of spinlocks, a time period of waiting for a requested shared resource, a number of lock instructions, and a rate of synchronization instruction execution.

The term "instruction type" refers to instructions that may be categorized according to the type of operation that is specified, such as a floating point instruction, a vector instruction, a rate of memory instructions, or another type of instruction. Each instruction type may vary in its degree of processor and/or resource requirement for execution, and an increase in the rate of executing certain instruction types may introduce latency into the performance of a processor. A rate of rate of instruction type calculated by a processor in block 302 may include at least one of a rate of floating point instructions, a rate of vector instructions, and a rate of memory instructions.

In block 304, a processor may allocate those threads whose thread execution metric satisfies a threshold to a selected processing core or cores. The value or values of the thread execution metric that may satisfy the threshold may depend on the type of thread execution metric considered. In various aspects, the thread execution metric may satisfy the threshold when the thread execution metric is below the threshold, is above the threshold, is less than or equal to the threshold, is greater than or equal to the threshold, or is equal to the threshold, depending on the particular metric. In other words, the threshold may be an upper bound or a lower bound. In some aspects, two (or more) thresholds may be used, such as to determine whether a thread execution metric is above a first threshold, below a second threshold, or between the first and second thresholds.

As an example, the thread execution metric may be a cache miss rate, and those threads that will perform more than a threshold number of read/write operations to non-cache memory may be allocated to one or a few cores. In this manner, those threads that will place the processing core in a wait state frequently while data is accessed from or written to non-cache memory may be allocated to one or a few cores, which may then be operated at a lower frequency to save power. This process in block 304 also may allocate the rest of the threads, which may primarily write to or read from cache memory and thus place the processing core in fewer wait states, to other processing cores, which may then be operated at a higher frequency to improve performance.

As another example, the thread execution metric may include a synchronization operation, and when a processor executes a threshold rate of synchronization operations, those threads that may trigger the performance of synchronization operations may be allocated to one or a few cores, which may then be operated at a lower frequency.

As another example, the thread execution metric may include a rate of instruction type, and when the processor executes a threshold rate of one or more particular instruction types, those threads of the one or more particular instruction types may be allocated to one or a few cores, which may then be operated at a lower frequency.

Based on the determined thread execution metric, a processor may allocate (i.e., assign, or schedule) each thread to one or a group of processing cores in block 304. When the thread execution metric of more than one thread satisfies the threshold, each of such threads may be allocated to the same processing core.

In an aspect, threads may be allocated to the selected processing core serially. In other words, when the determination is made that the thread execution metric of a thread satisfies the threshold, the thread may be allocated to the selected processing core. In another aspect, threads may be allocated to the selected processing core when the thread execution metric of a minimum or threshold number of threads satisfies the threshold.

In block 306, a processor may reduce the frequency of the processing core or cores selected to execute threads with a thread execution metric satisfying the threshold, to decrease the power consumption of the selected processing core or cores. For example, the operating frequency of the selected processing core may be reduced using a dynamic power reduction technique such as dynamic voltage and frequency scaling, dynamic clock and voltage scaling, and similar power reduction techniques. In an aspect, the operating frequency of the selected processing core may be reduced to a level based on the thread execution metric of the threads allocated to the selected processing core. For example, the higher the thread execution metric, the lower the frequency of the selected processing core may be. The processor may repeat method 300 periodically to dynamically re-determine the thread execution metric for threads in one or more processing cores.

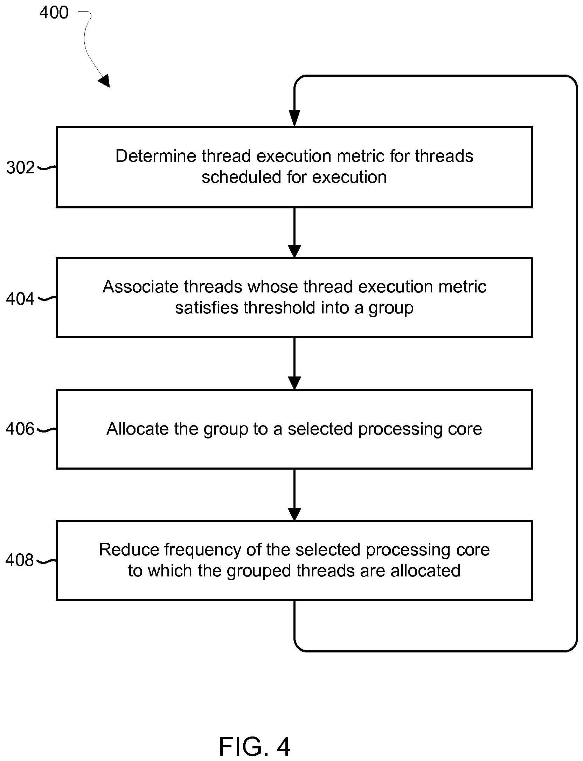

FIG. 4 is a process flow diagram illustrating another aspect method 400 of managing processor device power consumption by allocating threads to processing cores based on thread execution metrics. In block 302, a processor may determine a thread execution metric for each of a plurality of threads scheduled for execution in one of a plurality of processing core as described above with reference to FIG. 3.

In block 404, a processor may associate those threads whose thread execution metric satisfies a threshold into a group. For example, the thread execution metric of each thread may be compared to a threshold thread execution metric. In an aspect, when the thread execution metric of a thread satisfies the threshold, the thread may be allocated to the group. When the thread execution metric of more than one thread satisfies the threshold, each of such threads may be allocated to the same group. This group of threads may be characterized by high delay or inefficiency (e.g., high cache miss rates), and thus a high rate of placing the processing core in a wait state.

In block 406, a processor may allocate the group of threads whose thread execution metric satisfies the threshold to a selected processing core. Based on the determined thread execution metric, the group may be allocated (i.e., each thread in the group may be assigned or scheduled) to the selected processing core. In an aspect, when the thread execution metric of each thread in the group satisfies the threshold, the thread may be allocated to a selected processing core. The thread execution metric of the group of threads may also be determined based on an average thread execution metric of the threads allocated to the group (e.g., an average cache miss rate, an average synchronization operation rate, or an average rate of instruction type), a mean thread execution metric of the threads allocated to the group (e.g., a mean cache miss rate, a mean synchronization operation rate, or a mean rate of instruction type), a standard deviation from the mean thread execution metric (e.g., standard deviation from mean cache miss rate, a mean synchronization operation rate, or a mean rate of instruction type) of the threads allocated to the group, and an aggregate thread execution metric of the threads allocated to the group (e.g., an aggregate cache miss rate, synchronization operation rate, or rate of instruction type). Other examples are also possible, including combinations of the foregoing.

In block 408, a processor may reduce a frequency of the selected processing core, to decrease the power consumption of the selected processing core. In aspects, the operating frequency of the selected processing core may be reduced using a dynamic power reduction technique such as dynamic voltage and frequency scaling, dynamic clock and voltage scaling, or another similar power reduction technique. In an aspect, a characteristic of the thread execution metric may be determined for the selected processing core based on the thread execution metric of those threads allocated to the processing core, and the operating frequency of the selected processing core may be reduced based on the characteristic of the thread execution metric. For example, a characteristic cache miss rate may include one of an average cache miss rate of the threads allocated to the selected processing core (or of the group allocated to the processing core), a mean cache miss rate of the threads allocated to the selected processing core, a standard deviation from the mean cache miss rate of the threads allocated to the selected processing core, and an aggregate cache miss rate of the threads allocated to the selected processing core. In other examples, in addition or alternative to the characteristic cache miss rate, a characteristic synchronization operation rate, and/or a characteristic rate of instruction type may similarly be determined.

The operating frequency of the processing core may be reduced based on a relationship to the determined characteristic of the thread execution metric, such as by reducing the operating frequency proportional to the determined characteristic of the thread execution metric, based on a ratio between the determined characteristic of the thread execution metric and the operating frequency, calculating a frequency reduction factor based on the determined characteristic of the thread execution metric, or using another method of calculating the reduction of the operating frequency based on the determined characteristic of the thread execution metric. The processor may repeat the method 400 periodically in order to dynamically re-determine the characteristic of the thread execution metric for the selected processing core and/or for threads in one or more processing cores.

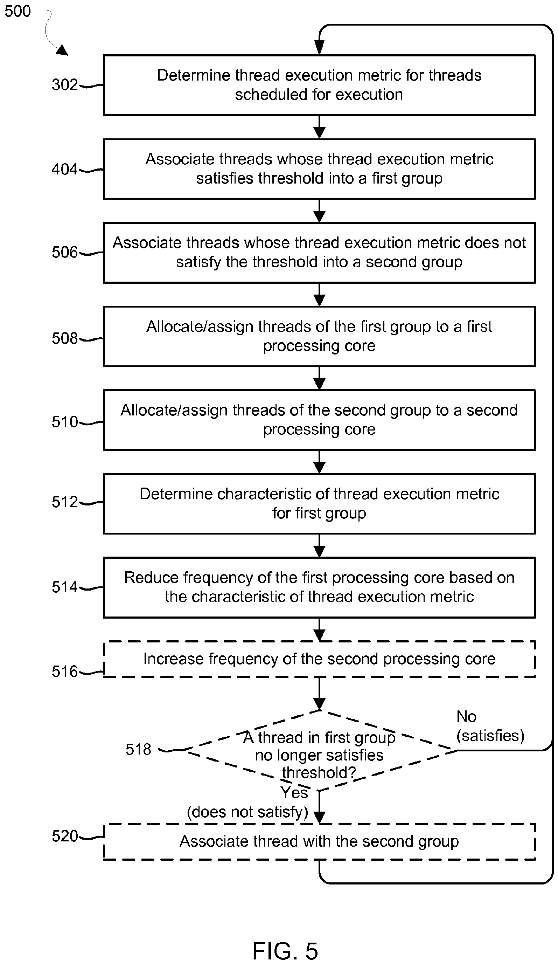

FIG. 5 is a process flow diagram illustrating another aspect method 500 of managing processor device power consumption. In block 302, a processor may determine a thread execution metric for each of a plurality of threads scheduled for execution in a processing core as described above with reference to FIG. 3.

In block 404, a processor may associate those threads whose thread execution metric satisfies a threshold into a first group as described above with reference to FIG. 4. Threads may be associated into the first group by associating an identifier of each thread with a first group identifier.

In block 506, a processor may associate those threads whose thread execution metric does not satisfy the threshold into a second group. Such threads may be associated into the second group by associating an identifier of each thread with a second group identifier.

In block 508, a processor may allocate threads in the first group (e.g., those threads whose thread execution metric satisfies the cache miss rate threshold) to a selected first processing core or cores. Based on the determined thread execution metric, the group may be allocated (i.e., each thread in the group may be assigned or scheduled) to the selected processing core. In an aspect, when the thread execution metric of each thread in the group satisfies the threshold, the threads of the group may be allocated to the selected processing core. The thread execution metric of the group of threads may also be determined based on an average thread execution metric of the threads allocated to the group, a mean thread execution metric of the threads allocated to the group, a standard deviation from the mean thread execution metric of the threads allocated to the group, and an aggregate thread execution metric of the threads allocated to the group. Other examples are also possible, including combinations of the foregoing. Threads may be allocated to the selected processing core based on a thread identifier, or based on a group identifier indicating that a thread has been associated into the first group.

In block 510, a processor may allocate threads within the second group (i.e., those threads whose thread execution metric does not satisfy the threshold thread execution metric) to a selected second processing core or cores. The threads of the second group may be allocated to the second processing core(s) based on a thread identifier, or based on a group identifier indicating that a thread has been associated into the second group.

In block 512, a processor may determine a characteristic of the thread execution metric for the first processing core based on the thread execution metric of those threads allocated to the first group. The characteristic of the thread execution metric may include one or more of a characteristic cache miss rate, a characteristic synchronization operation rate, and a characteristic rate of instruction type. In various aspects, the characteristic cache miss rate may include one of an average cache miss rate of the threads allocated to the selected processing core (or of the group allocated to the processing core), a mean cache miss rate of the threads allocated to the selected processing core, a standard deviation from the mean cache miss rate of the threads allocated to the selected processing core, and an aggregate cache miss rate of the threads allocated to the selected processing core. Additionally or alternatively, the characteristic synchronization operation rate may include one of an average synchronization operation rate of the threads allocated to the selected processing core (or of the group allocated to the processing core), a mean synchronization operation rate of the threads allocated to the selected processing core, a standard deviation from the mean synchronization operation rate of the threads allocated to the selected processing core, and an aggregate synchronization operation rate of the threads allocated to the selected processing core. Additionally or alternatively, the characteristic rate of instruction type may include one of an average rate of instruction type of the threads allocated to the selected processing core (or of the group allocated to the processing core), a mean rate of instruction type of the threads allocated to the selected processing core, a standard deviation from the mean rate of instruction type of the threads allocated to the selected processing core, and an aggregate rate of instruction type of the threads allocated to the selected processing core.

In block 514, a processor may reduce the operating frequency of the first processing core to decrease the power consumption of the selected processing core. The operating frequency of the first processing core may be reduced based on a relationship to the determined characteristic of the thread execution metric. For example, the operating frequency of the first processing core may be determined based on the determined characteristic of the thread execution metric, based on a ratio between the determined characteristic of the thread execution metric and the operating frequency, by calculating a frequency reduction factor based on the determined characteristic of the thread execution metric, or by another method of calculating the reduction of the operating frequency based on the determined characteristic of the thread execution metric. In various aspects, the operating frequency of the selected processing core may be reduced using a dynamic power reduction technique such as dynamic voltage and frequency scaling, dynamic clock and voltage scaling, or another similar power reduction technique. As discussed above, the frequency of the first processing core can be reduced without significantly impacting overall performance because the latency of the large number of read/write operations to non-cache memory will dominate the processing performance of that core.

In optional block 516, a processor may increase a frequency of the second processing core or cores in order to increase the processing speed of those threads whose thread execution metric does not satisfy the threshold. Those threads whose thread execution metric does not satisfy the threshold may be determined to use processing resources of the second processor more efficiently, e.g., by introducing less delay to the second processor, or by requiring fewer main memory accesses, thus causing the second processor to enter relatively fewer wait states than the first processor. While increasing the operating frequency of the second processor may increase its power consumption, the overall efficiency of the system may be increased through the more efficient use of the second processor. In aspects, the operating frequency of the selected processing core may be increased using a dynamic power reduction technique such as dynamic voltage and frequency scaling, dynamic clock and voltage scaling, and similar techniques.

Threads may also be recategorized and/or reassociated into a different group as their thread execution metrics change, such as after a sequence of system memory accesses or a sequence of operations. In optional determination block 518, the processor may determine whether the thread execution metric of the pending operations of a thread initially associated with the first group no longer satisfies the threshold cache miss rate. This may happen, for example, when a thread's pending operations will be performed on data previously obtained from system memory. In such as case, after a sequence of operations with a high cache miss rate to obtain data from system memory, a thread may shift to performing operations that rely primarily on cache read and write operations, such that data or instructions required by a thread may be available in one or more caches for a period of time following a sequence of system memory calls during which the thread exhibited a high cache miss rate and the thread was executed by the first processing core.

When the processor determines that the thread execution metric of a thread allocated to the first processing core no longer satisfies the threshold (i.e., optional determination block 518 = "Yes"), the processor may associate the thread with the second group, and thus may allocate the thread to the second processing core(s) in optional block 520 so that the pending operations can be executed at a higher processing frequency. If no threads in the first group no longer satisfy the thread execution metric (i.e., optional determination block 518 = "No"), the processor may not reallocate any threads, and may repeat the operations of the method 500 periodically.

The processor may repeat the operations of the method 500 periodically in order to dynamically re-determine the characteristic thread execution metric for the selected processing core and/or for threads in one or more processing cores. Dynamically reassessing and reallocating threads to groups or processor cores as threads execute may be beneficial as the thread execution metric of pending operations in threads may change in time. As discussed above with regard to optional determination block 518, a thread may initially have a thread execution metric that satisfies a threshold as it acquires data from system memory, but may have thread execution metric that does not satisfy the threshold for a sequence of operations that work on the obtained data. Similarly, a thread that initially had a thread execution metric that did not satisfy the threshold and so was associated with the second group may transition to a thread execution metric that satisfies a threshold when writing the results of operations to system memory or a display buffer.

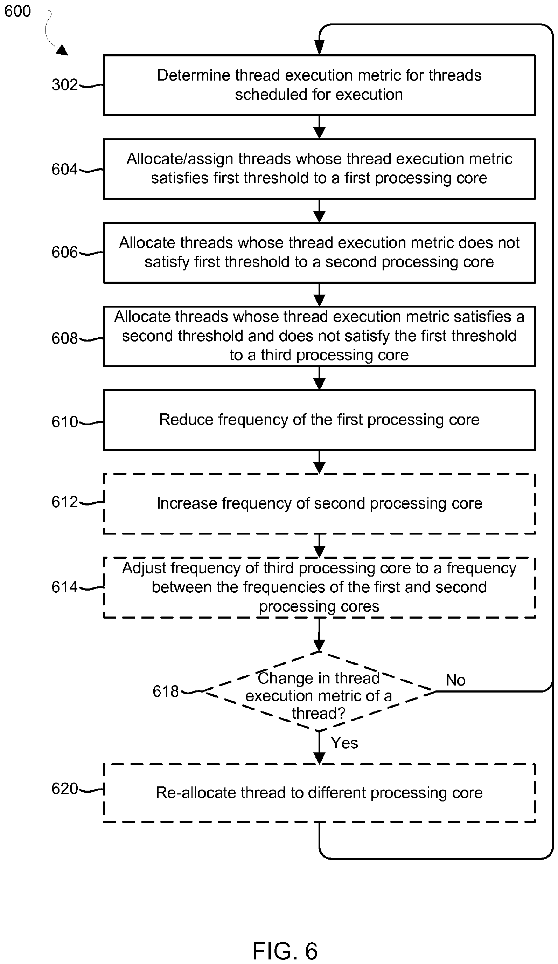

FIG. 6 is a process flow diagram illustrating another aspect method 600 of managing processor device power consumption. In block 302, a processor may determine a thread execution metric for each of a plurality of threads scheduled for execution in a processing core as described above with reference to FIG. 3.

In block 604, a processor may allocate or assign those threads whose thread execution metric satisfies a first threshold to a first processing core for execution. In an aspect, the thread execution metric of each thread may be considered individually. In an aspect, the thread execution metric of the group of threads may also be determined based on an average thread execution metric of the threads allocated to the group, a mean thread execution metric of the threads allocated to the group, a standard deviation from the mean thread execution metric of the threads allocated to the group, and an aggregate thread execution metric of the threads allocated to the group. Other thread execution metrics are also possible, including combinations of the foregoing.

In block 606, a processor may allocate those threads whose thread execution metric does not satisfy the first threshold to a selected second processing core or cores. In block 608, the processor may allocate those threads whose thread execution metrics satisfy the second threshold but does not satisfy the first threshold to a third processing core of the plurality of processing cores. In an aspect, the first threshold may correspond to a thread execution metric threshold which is higher than the second threshold. In aspect, more than two thresholds may be used to allocate threads to one or more processors, which may provide greater granularity of evaluations of the thread execution metrics of the threads. Further, although the blocks 604, 606, and 608 are described in a particular sequence for clarity of explanation, blocks 604, 606, and 608 may be performed in any order, or substantially simultaneously.

In block 610, a processor may decrease the operating frequency of the first processing core to decrease the power consumption of the selected processing core. The operating frequency of the first processing core may be reduced based on a determined characteristic of the thread execution metrics associated with threads allocated to the first processing core. As discussed above, the frequency of the first processing core can be reduced without significantly impacting overall performance because the latency of the large number of read/write operations to non-cache memory will dominate the processing performance of that core.

In optional block 612, a processor may increase a frequency of the second processing core in order to increase the processing speed of those threads whose thread execution metric does not satisfy the threshold. Those threads whose thread execution metric does not satisfy the first threshold may be determined to use processing resources of the second processor more efficiently, e.g., by introducing less delay to the second processor, or by requiring fewer main memory accesses, thus causing the second processor to enter relatively fewer wait states than the first processor. In various aspects, the operating frequency of the selected processing core may be increased using a dynamic power reduction technique such as dynamic voltage and frequency scaling, dynamic clock and voltage scaling, and similar techniques.

In optional block 614, a processor may adjust a frequency of the third processing core to a frequency between the frequencies of the first and second processing cores. The operating frequency of the first processing core may be adjusted based on a determined characteristic of the thread execution metrics associated with the threads allocated to the third processing core, and may also be based on the frequencies of the first and second processing cores.

Threads may also be reallocated to a different processing core as their thread execution metrics change, such as after a sequence of system memory accesses or a sequence of operations. In optional determination block 618, a processor may determine whether the thread execution metric of a thread allocated to the first, second, or third processing core has changed with respect to the first and/or second threshold. When the processor determines that the thread execution metric of a thread allocated to the a processing core has changed with respect to the first and/or second threshold (i.e., optional determination block 618 = "Yes"), the processor may allocate the thread to a different processing core in optional block 620 according to its changed execution metric and the first and/or second thresholds. If all threads have not changed with respect to the first and/or second threshold (i.e., optional determination block 618 = "No"), the processor may not reallocate any threads.

The processor may repeat the operations of the method 600 periodically in order to reassess and reallocate threads to groups or processor cores by dynamically re-determine the characteristic thread execution metric for the selected processing core and/or for threads in one or more processing cores. Dynamically reassessing and reallocating threads to groups or processor cores as threads execute may be beneficial as the thread execution metric of pending operations in threads may change over time. As discussed above with regard to optional determination block 618, a thread may initially have a thread execution metric that satisfies a threshold (e.g., as it acquires data from system memory, or requires a certain level of processing resources), but may have a thread execution metric that does not satisfy the threshold for a sequence of operations, e.g., that work on the obtained data, or which require a different level of processing resources.

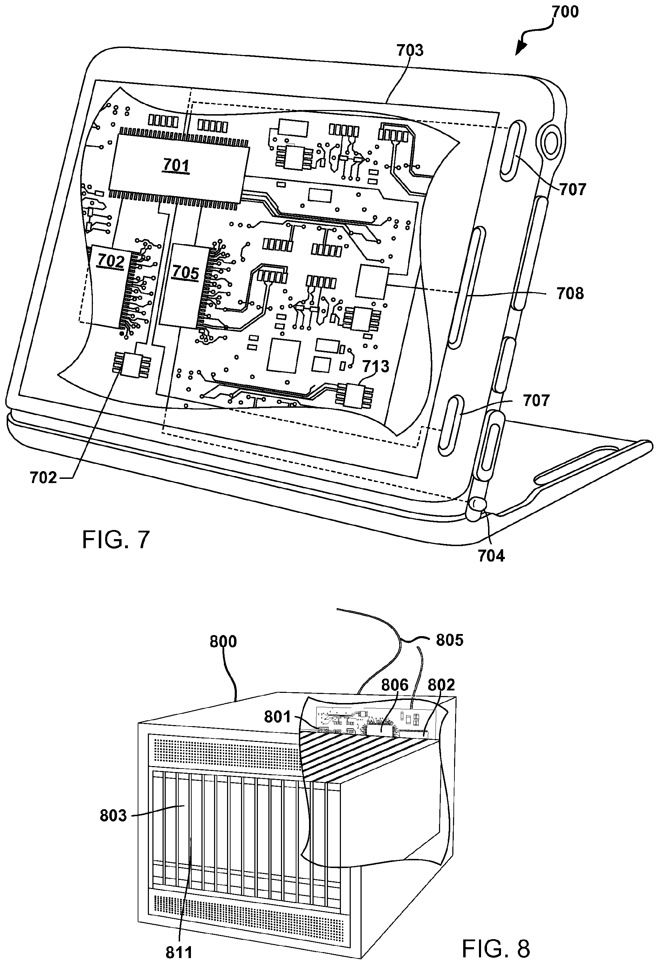

The various aspects may be implemented on a variety of mobile computing devices, an example of which is illustrated in FIG. 7. Specifically, FIG. 7 is a system block diagram of a mobile transceiver device in the form of a smartphone/cell phone 700 suitable for use with any of the aspects. The cell phone 700 may include a processor 701 coupled to internal memory 702, a display 703, and to a speaker 708. Additionally, the cell phone 700 may include an antenna 704 for sending and receiving electromagnetic radiation that may be connected to a wireless data link and/or cellular telephone transceiver 705 coupled to the processor 701. Cell phones 700 typically also include menu selection buttons or rocker switches 706 for receiving user inputs.

A typical cell phone 700 also includes a sound encoding/decoding (CODEC) circuit 713 that digitizes sound received from a microphone into data packets suitable for wireless transmission and decodes received sound data packets to generate analog signals that are provided to the speaker 708 to generate sound. Also, one or more of the processor 701, wireless transceiver 705 and CODEC 713 may include a digital signal processor (DSP) circuit (not shown separately). The cell phone 700 may further include a ZigBee transceiver (i.e., an IEEE 802.15.4 transceiver) 713 for low-power short-range communications between wireless devices, or other similar communication circuitry (e.g., circuitry implementing the Bluetooth® or WiFi protocols, etc.).

Various aspects may be implemented on any of a variety of commercially available server devices, such as the server 800 illustrated in FIG. 8. Such a server 800 typically includes a processor 801 coupled to volatile memory 802 and a large capacity nonvolatile memory, such as a disk drive 803. The server 800 may also include a floppy disc drive, compact disc (CD) or DVD disc drive 811 coupled to the processor 801. The server 800 may also include network access ports 806 coupled to the processor 801 for establishing data connections with a network 805, such as a local area network coupled to other communication system computers and servers.

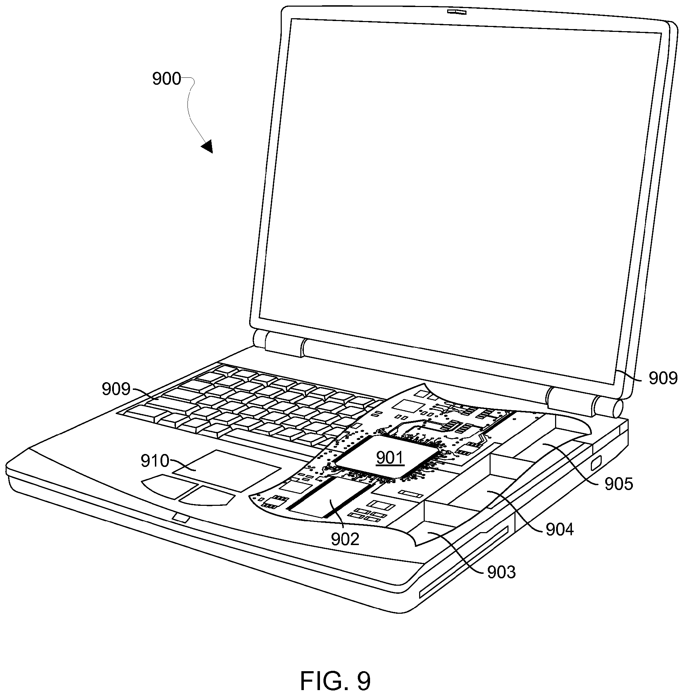

Other forms of computing devices may also benefit from the various aspects. Such computing devices typically include the components illustrated in FIG. 9, which illustrates an example personal laptop computer 900. Such a personal computer 900 generally includes a processor 901 coupled to volatile memory 902 and a large capacity nonvolatile memory, such as a disk drive 903. The computer 900 may also include a compact disc (CD) and/or DVD drive 904 coupled to the processor 901. The computer device 900 may also include a number of connector ports coupled to the processor 901 for establishing data connections or receiving external memory devices, such as a network connection circuit 905 for coupling the processor 901 to a network. The computer 900 may further be coupled to a keyboard 908, a pointing device such as a mouse 910, and a display 909 as is well known in the computer arts.

The processors 701, 801, 901 may be any programmable microprocessor, microcomputer or multiple processor chip or chips that can be configured by software instructions (applications) to perform a variety of functions, including the functions of the various aspects described below. In some mobile devices, multiple processors 801 may be provided, such as one processor dedicated to wireless communication functions and one processor dedicated to running other applications. Typically, software applications may be stored in the internal memory 702, 802, 902 before they are accessed and loaded into the processor 701, 801, 901. The processor 701, 801, 901 may include internal memory sufficient to store the application software instructions.

The various aspects may be implemented in any number of single or multiprocessor systems. Generally, processes are executed on a processor in short time slices so that it appears that multiple processes are running simultaneously on a single processor. When a process is removed from a processor at the end of a time slice, information pertaining to the current operating state of the process is stored in memory so the process may seamlessly resume its operations when it returns to execution on the processor. This operational state data may include the process's address space, stack space, virtual address space, register set image (e.g. program counter, stack pointer, instruction register, program status word, etc.), accounting information, permissions, access restrictions, and state information.

A process may spawn other processes, and the spawned process (i.e., a child process) may inherit some of the permissions and access restrictions (i.e., context) of the spawning process (i.e., the parent process). A process may be a heavyweight process that includes multiple lightweight processes or threads, which are processes that share all or portions of their context (e.g., address space, stack, permissions and/or access restrictions, etc.) with other processes/threads. Thus, a single process may include multiple lightweight processes or threads that share, have access to, and/or operate within a single context (i.e., the processor's context).

The foregoing method descriptions and the process flow diagrams are provided merely as illustrative examples and are not intended to require or imply that the blocks of the various aspects must be performed in the order presented. As will be appreciated by one of skill in the art the order of blocks in the foregoing aspects may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

While the foregoing describes that a threshold may be met when a value is greater than or equal to the threshold, it will be appreciated that this is not a limitation, and that in aspects a threshold may be met when a value exceeds the threshold and not met when the value is less than or equal to the threshold.

The various illustrative logical blocks, modules, circuits, and algorithm blocks described in connection with the aspects disclosed herein may be implemented as electronic hardware, computer software, or combinations of both. To clearly illustrate this interchangeability of hardware and software, various illustrative components, blocks, modules, circuits, and blocks have been described above generally in terms of their functionality. Whether such functionality is implemented as hardware or software depends upon the particular application and design constraints imposed on the overall system.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some blocks or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention.

## Claims

1. A method of managing processor device power consumption, comprising:
determining (302) a thread execution metric for each of a plurality of threads scheduled for execution in a processor comprising a plurality of processing cores,
wherein the thread execution metric comprises a cache miss rate comprising a number of wait states of a processor based on failed attempts to read or write data in a cache,
and wherein the thread execution metric further comprises a synchronization operation rate;
allocating (304), to a first processing core of the plurality of processing cores, those threads of the plurality of threads whose thread execution metric satisfies a first threshold, wherein the first threshold comprises a synchronization operation rate threshold value; and
reducing (306) a frequency of the first processing core to reduce the first processing core's power consumption.

2. The method of claim 1, wherein allocating, to a first processing core of the plurality of processing cores, those threads of the plurality of threads whose thread execution metric satisfies a first threshold comprises:
associating (404) into a first group those threads of the plurality of threads whose thread execution metric satisfies the first threshold; and
allocating (406) the first group of threads to the first processing core.

3. The method of claim 1, further comprising allocating (506), to a second processing core of the plurality of processing cores, those threads of the plurality of threads whose thread execution metric does not satisfy the first threshold.

4. The method of claim 1, wherein reducing a frequency of the first processing core further comprises:
determining a characteristic cache miss rate for the first processing core based on the cache miss rate of the threads allocated to the first processing core; and
reducing the frequency of the first processing core based on the determined characteristic cache miss rate.

5. The method of claim 1, wherein the synchronization operation rate comprises at least one of a number of spinlocks, a time period of waiting for a requested shared resource, a number of lock instructions, and a rate of synchronization instruction execution.

6. The method of claim 1, wherein reducing a frequency of the first processing core further comprises:
determining a characteristic synchronization operation rate for the first processing core based on the synchronization operation rate of the threads allocated to the first processing core; and
reducing the frequency of the first processing core based on the determined characteristic synchronization operation rate.

7. The method of claim 1, wherein:
the thread execution metric further comprises a rate of instruction type; and
the first threshold further comprises a rate of instruction type threshold value.

8. A computer-program comprising instructions which, when executed on a computer, perform a method according to any of the claims 1 to 7.

9. A computing device, comprising:
means for determining a thread execution metric for each of a plurality of threads scheduled for execution in a processor comprising a plurality of processing cores,
wherein the thread execution metric comprises a cache miss rate comprising a number of wait states of a processor based on failed attempts to read or write data in a cache,
and wherein the thread execution metric further comprises a synchronization operation rate;
means for allocating, to a first processing core of the plurality of processing cores, those threads of the plurality of threads whose thread execution metric satisfies a first threshold, wherein the first threshold comprises a synchronization operation rate threshold value; and
means for reducing a frequency of the first processing core to reduce the first processing core's power consumption.

10. The computing device of claim 9, wherein means for allocating, to a first processing core of the plurality of processing cores, those threads of the plurality of threads whose thread execution metric satisfies a first threshold comprises:
means for associating into a first group those threads of the plurality of threads whose thread execution metric satisfies the first threshold; and
means for allocating the first group of threads to the first processing core.

11. The computing device of claim 9, further comprising means for allocating, to a second processing core of the plurality of processing cores, those threads of the plurality of threads whose thread execution metric does not satisfy the first threshold.

12. The computing device of claim 9, wherein means for reducing a frequency of the first processing core further comprises:
means for determining a characteristic cache miss rate for the first processing core based on the cache miss rate of the threads allocated to the first processing core; and
means for reducing the frequency of the first processing core based on the determined characteristic cache miss rate.

13. The computing device of claim 9, wherein the synchronization operation rate comprises at least one of a number of spinlocks, a time period of waiting for a requested shared resource, a number of lock instructions, and a rate of synchronization instruction execution.

14. The computing device of claim 9, wherein means for reducing a frequency of the first processing core further comprises:
means for determining a characteristic synchronization operation rate for the first processing core based on the synchronization operation rate of the threads allocated to the first processing core; and
means for reducing the frequency of the first processing core based on the determined characteristic synchronization operation rate.

15. The computing device of claim 9, wherein:
the thread execution metric further comprises a rate of instruction type; and
the first threshold further comprises a rate of instruction type threshold value.

## Patentansprüche

1. Verfahren zum Verwalten von Stromverbrauch einer Prozessorvorrichtung, umfassend:
Bestimmen (302) einer Thread-Ausführungsmetrik für jeden aus einer Vielzahl von Threads, die für die Ausführung in einem Prozessor geplant sind, der eine Vielzahl von Verarbeitungskernen umfasst, wobei die Thread-Ausführungsmetrik eine Cache-Fehlerrate umfasst, die eine Anzahl von Wartezuständen eines Prozessors umfasst, basierend auf fehlgeschlagenen Versuchen, Daten zu lesen oder in einen Cache zu schreiben, und wobei die Thread-Ausführungsmetrik ferner eine Synchronisationsbetriebsrate umfasst;
Zuordnen (304) derjenigen Threads der Vielzahl von Threads, deren Thread-Ausführungsmetrik einen ersten Schwellenwert erfüllt, zu einem ersten Verarbeitungskern der Vielzahl von Verarbeitungskernen, wobei der erste Schwellenwert einen Synchronisationsbetriebsratenschwellenwert umfasst; und
Reduzieren (306) einer Frequenz des ersten Verarbeitungskerns, um den Stromverbrauch des ersten Verarbeitungskerns zu reduzieren.

2. Verfahren nach Anspruch 1, wobei das Zuordnen der Threads der Vielzahl von Threads, deren Thread-Ausführungsmetrik einen ersten Schwellenwert erfüllt, zu einem ersten Verarbeitungskern der Vielzahl von Verarbeitungskernen umfasst:
Zuordnen (404) der Threads aus der Vielzahl von Threads, deren Thread-Ausführungsmetrik den ersten Schwellenwert erfüllt, zu einer ersten Gruppe; und
Zuordnen (406) der ersten Gruppe von Threads zu dem ersten Verarbeitungskern.

3. Verfahren nach Anspruch 1, ferner umfassend das Zuordnen (506) der Threads der Vielzahl von Threads, deren Thread-Ausführungsmetrik den ersten Schwellenwert nicht erfüllt, zu einem zweiten Verarbeitungskern der Vielzahl von Verarbeitungskernen.

4. Verfahren nach Anspruch 1, wobei das Reduzieren einer Frequenz des ersten Verarbeitungskerns ferner umfasst:
Bestimmen einer charakteristischen Cache-Fehlerrate für den ersten Verarbeitungskern basierend auf der Cache-Fehlerrate der dem ersten Verarbeitungskern zugeordneten Threads; und
Reduzieren der Frequenz des ersten Verarbeitungskerns basierend auf der bestimmten charakteristischen Cache-Fehlerrate.

5. Verfahren nach Anspruch 1, worin die Synchronisationsbetriebsrate mindestens eines aus einer Anzahl von Spinlocks, eine Zeitspanne des Wartens auf eine angeforderte gemeinsame Ressource, eine Anzahl von Sperrbefehlen und eine Rate der Ausführung von Synchronisationsbefehl umfasst.

6. Verfahren nach Anspruch 1, wobei das Reduzieren einer Frequenz des ersten Verarbeitungskerns ferner umfasst:
Bestimmen einer charakteristischen Synchronisationsbetriebsrate für den ersten Verarbeitungskern basierend auf der Synchronisationsbetriebsrate der dem ersten Verarbeitungskern zugeordneten Threads; und
Reduzieren der Frequenz des ersten Verarbeitungskerns basierend auf der bestimmten charakteristischen Synchronisationsbetriebsrate.

7. Verfahren nach Anspruch 1, wobei:
die Thread-Ausführungsmetrik ferner eine Rate von Befehlstyp umfasst; und
der erste Schwellenwert ferner eine Rate von Befehlstypschwellenwert umfasst.

8. Computerprogramm, umfassend Befehle, die, wenn sie auf einem Computer ausgeführt werden, ein Verfahren nach einem der Ansprüche 1 bis 7 durchführen.

9. Eine Rechenvorrichtung, umfassend:
Mittel zum Bestimmen einer Thread-Ausführungsmetrik für jeden aus einer Vielzahl von Threads, die für die Ausführung in einem Prozessor geplant sind, der eine Vielzahl von Verarbeitungskernen umfasst, wobei die Thread-Ausführungsmetrik eine Cache-Fehlerrate umfasst, die eine Anzahl von Wartezuständen eines Prozessors umfasst, basierend auf fehlgeschlagenen Versuchen, Daten zu lesen oder in einen Cache zu schreiben, und wobei die Thread-Ausführungsmetrik ferner eine Synchronisationsbetriebsrate umfasst;
Mittel zum Zuordnen der Threads der Vielzahl von Threads, deren Thread-Ausführungsmetrik einen ersten Schwellenwert erfüllt, zu einem ersten Verarbeitungskern der Vielzahl von Verarbeitungskernen, wobei der erste Schwellenwert einen Synchronisationsbetriebsschwellenwert umfasst; und
Mittel zum Reduzieren einer Frequenz des ersten Verarbeitungskerns, um den Stromverbrauch des ersten Verarbeitungskerns zu reduzieren.

10. Die Rechenvorrichtung nach Anspruch 9, wobei Mittel zum Zuordnen der Threads aus der Vielzahl von Threads, deren Thread-Ausführungsmetrik einen ersten Schwellenwert erfüllt, zu einem ersten Verarbeitungskern aus der Vielzahl von Verarbeitungskernen umfassen:
Mittel zum Zuordnen der Threads aus der Vielzahl von Threads, deren Thread-Ausführungsmetrik den ersten Schwellenwert erfüllt, zu einer ersten Gruppe; und
Mittel zum Zuordnen der ersten Gruppe von Threads zu dem ersten Verarbeitungskern.

11. Die Rechenvorrichtung nach Anspruch 9, ferner umfassend Mittel zum Zuordnen der Threads der Vielzahl von Threads, deren Thread-Ausführungsmetrik den ersten Schwellenwert nicht erfüllt, zu einem zweiten Verarbeitungskern der Vielzahl von Verarbeitungskernen.

12. Die Rechenvorrichtung nach Anspruch 9, wobei Mittel zum Reduzieren einer Frequenz des ersten Verarbeitungskerns ferner umfassen:
Mittel zum Bestimmen einer charakteristischen Cache-Fehlerrate für den ersten Verarbeitungskern basierend auf der Cache-Fehlerrate der dem ersten Verarbeitungskern zugeordneten Threads; und
Mittel zum Reduzieren der Frequenz des ersten Verarbeitungskerns basierend auf der bestimmten charakteristischen Cache-Fehlerrate.

13. Die Rechenvorrichtung nach Anspruch 9, worin die Synchronisationsbetriebsrate mindestens eines aus einer Anzahl von Spinlocks, eine Zeitspanne des Wartens auf eine angeforderte gemeinsame Ressource, eine Anzahl von Sperrbefehlen und eine Rate der Ausführung von Synchronisationsbefehl umfasst.

14. Die Rechenvorrichtung nach Anspruch 9, wobei Mittel zum Reduzieren einer Frequenz des ersten Verarbeitungskerns ferner umfassen:
Mittel zum Bestimmen einer charakteristischen Synchronisationsbetriebsrate für den ersten Verarbeitungskern basierend auf der Synchronisationsbetriebsrate der dem ersten Verarbeitungskern zugeordneten Threads; und
Mittel zum Reduzieren der Frequenz des ersten Verarbeitungskerns basierend auf der bestimmten charakteristischen Synchronisationsbetriebsrate.

15. Die Rechenvorrichtung nach Anspruch 9, wobei:
die Thread-Ausführungsmetrik ferner eine Rate von Befehlstyp umfasst; und
der erste Schwellenwert ferner eine Rate von Befehlstypschwellenwert umfasst.

## Revendications

1. Procédé de gestion de la consommation d'énergie d'un dispositif processeur, comprenant :
la détermination (302) d'une métrique d'exécution de thread pour chacun d'une pluralité de threads planifiés pour exécution dans un processeur comprenant une pluralité de coeurs de traitement, dans lequel la métrique d'exécution de thread comprend un taux d'échec sur cache comprenant un nombre d'états d'attente d'un processeur sur la base de tentatives échouées de lecture ou d'écriture de données dans une cache, et dans lequel la métrique d'exécution de thread comprend en outre un taux d'opérations de synchronisation ;
l'allocation (304), à un premier coeur de traitement de la pluralité de coeurs de traitement, des threads de la pluralité de threads dont une métrique d'exécution de thread satisfait un premier seuil, dans lequel le premier seuil comprend une valeur de seuil de taux d'opérations de synchronisation ; et
la réduction (306) d'une fréquence du premier coeur de traitement pour réduire la consommation d'énergie du premier coeur de traitement.

2. Procédé selon la revendication 1, dans lequel l'allocation, à un premier coeur de traitement de la pluralité de coeurs de traitement, des threads de la pluralité de threads dont une métrique d'exécution de thread satisfait un premier seuil comprend :
l'association (404) dans un premier groupe des threads de la pluralité de threads dont une métrique d'exécution de thread satisfait le premier seuil ; et
l'allocation (406) du premier groupe de threads au premier coeur de traitement.

3. Procédé selon la revendication 1, comprenant en outre l'allocation (506), à un deuxième coeur de traitement de la pluralité de coeurs de traitement, des threads de la pluralité de threads dont une métrique d'exécution de thread ne satisfait pas le premier seuil.

4. Procédé selon la revendication 1, dans lequel la réduction d'une fréquence du premier coeur de traitement comprend en outre :
la détermination d'un taux d'échec sur cache caractéristique pour le premier coeur de traitement sur la base du taux d'échecs de cache des threads alloués au premier coeur de traitement ; et
la réduction de la fréquence du premier coeur de traitement sur la base du taux d'échec sur cache caractéristique déterminé.

5. Procédé selon la revendication 1, dans lequel le taux d'opérations de synchronisation comprend au moins un parmi un nombre de spinlocks, une période de temps d'attente pour une ressource partagée demandée, un nombre d'instructions verrouillées et un taux d'exécution d'instructions de synchronisation.

6. Procédé selon la revendication 1, dans lequel la réduction d'une fréquence du premier coeur de traitement comprend en outre :
la détermination d'un taux d'opérations de synchronisation caractéristique pour le premier coeur de traitement sur la base du taux d'opérations de synchronisation des threads alloués au premier coeur de traitement ; et
la réduction de la fréquence du premier coeur de traitement sur la base du taux d'opérations de synchronisation caractéristique déterminé.

7. Procédé selon la revendication 1, dans lequel :
la métrique d'exécution de thread comprend en outre un taux de type d'instruction ; et
le premier seuil comprend en outre une valeur de seuil de taux de type d'instruction.

8. Programme informatique comprenant des instructions qui, quand elles sont exécutées sur un ordinateur, mettent oeuvre un procédé selon l'une des revendications 1 à 7.

9. Dispositif informatique comprenant :
des moyens pour déterminer une métrique d'exécution de thread pour chacun d'une pluralité de threads planifiés pour l'exécution dans un processeur comprenant une pluralité de coeurs de traitement, dans lequel la métrique d'exécution de thread comprend un taux d'échec sur cache comprenant un nombre d'états d'attente d'un processeur sur la base de tentatives échouées de lecture ou d'écriture de données dans une cache, et dans lequel la métrique d'exécution de thread comprend en outre un taux d'opérations de synchronisation ;
des moyens pour allouer, à un premier coeur de traitement de la pluralité de coeurs de traitement, les threads de la pluralité de threads dont une métrique d'exécution de thread satisfait un premier seuil, dans lequel le premier seuil comprend une valeur de seuil de taux d'opérations de synchronisation ; et
des moyens pour réduire une fréquence du premier coeur de traitement pour réduire la consommation d'énergie du premier coeur de traitement.

10. Dispositif informatique selon la revendication 9, dans lequel des moyens pour allouer, à un premier coeur de traitement de la pluralité de coeurs de traitement, les threads de la pluralité de threads dont une métrique d'exécution de thread satisfait un premier seuil comprennent :
des moyens pour associer dans un premier groupe les threads de la pluralité de threads dont une métrique d'exécution de thread satisfait le premier seuil ; et
des moyens pour allouer le premier groupe de threads au premier coeur de traitement.

11. Dispositif informatique selon la revendication 9, comprenant en outre les moyens pour allouer, à un deuxième coeur de traitement de la pluralité de coeurs de traitement, les threads de la pluralité de threads dont une métrique d'exécution de thread ne satisfait pas le premier seuil.

12. Dispositif informatique selon la revendication 9, dans lequel les moyens pour réduire une fréquence du premier coeur de traitement comprennent en outre :
des moyens pour déterminer un taux d'échec sur cache caractéristique pour le premier coeur de traitement sur la base du taux d'échec sur cache des threads alloués au premier coeur de traitement ; et
des moyens pour réduire la fréquence du premier coeur de traitement sur la base du taux d'échec sur cache caractéristique déterminé.

13. Dispositif informatique selon la revendication 9, dans lequel le taux d'opérations de synchronisation comprend au moins un parmi un nombre de spinlocks, une période de temps d'attente pour une ressource partagée demandée, un nombre d'instructions en verrouillage et un taux d'exécution d'instructions de synchronisation.

14. Dispositif informatique selon la revendication 9, dans lequel les moyens pour réduire une fréquence du premier coeur de traitement comprennent en outre :
des moyens pour déterminer un taux d'opérations de synchronisation caractéristique pour le premier coeur de traitement sur la base du taux d'opérations de synchronisation des threads alloués au premier coeur de traitement ; et
des moyens pour réduire la fréquence du premier coeur de traitement sur la base du taux d'opérations de synchronisation caractéristique déterminé.

15. Dispositif informatique selon la revendication 9, dans lequel :
la métrique d'exécution de thread comprend en outre un taux de type d'instruction ; et
le premier seuil comprend en outre une valeur de seuil de taux de type d'instruction.
